(19)

Europäisches
Patentamt

European
Patent Office

Office européen
des brevets

(11)  **EP 4 447 565 A1**

(12)  **EUROPEAN PATENT APPLICATION**

(43) Date of publication:
**16.10.2024  Bulletin 2024/42**

(21) Application number: **24163269.4**

(22) Date of filing: **13.03.2024**

(51) International Patent Classification (IPC):
**H04W 52/36** (2009.01)  **H04W 52/14** (2009.01)

(52) Cooperative Patent Classification (CPC):
**H04W 52/367;** H04W 52/146

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **10.04.2023  US 202363495221 P**

(71) Applicant: **Nokia Technologies Oy**
**02610 Espoo (FI)**

(72) Inventors:
• UMEDA, Hiromasa
**Tokyo, 106-6141 (JP)**
• MARJELUND, Pekka Johannes
**08680 Lohja (FI)**

(74) Representative: **Bryers Intellectual Property Ltd**
**Bristol & Bath Science Park**
**Dirac Crescent, Emerson's Green**
**Bristol, BS16 7FR (GB)**

(54)  **METHOD AND APPARATUS FOR DETERMINING A CONFIGURED MAXIMUM OUTPUT POWER BASED ON AT LEAST ONE BOUNDARY**

(57)  A method, apparatus and computer program product are provided for defining a configured maximum output power of a user equipment. In the context of a method, a configured maximum output power of the user equipment in a respective slot for a carrier of a serving cell is determined based on at least one boundary. The at least one boundary is determined based at least partly upon a scaling factor dependent upon a number of antenna ports having a non-zero transmission power on a physical uplink shared channel (PUSCH). The method also reports the determined configured maximum output power to a network node operating the serving cell, thereby allowing the network to control the conditions of the uplink transmission more accurately.

Figure 1

**Description**

TECHNICAL FIELD

An example embodiment relates generally to a method, apparatus and computer program product for determining a configured maximum output power of a user equipment and, more particularly, to a method, apparatus and computer program product for determining the configured maximum output power of the user equipment in a respective slot for a carrier of a serving cell based on at least one boundary in, in some embodiments, based on upper and lower boundaries.

BACKGROUND

During uplink transmissions, such as via the physical uplink shared channel (PUSCH), a user equipment (UE) and the network perform uplink power control. Based on the configured maximum output power of the UE, that is the maximum possible power that the UE can configure at the time, the network can consider the power headroom, that is, the power remaining between the configured maximum output power of the UE and the expected output power of the UE taking into account, for example, pathloss, the number of resource blocks, etc., as provided via a power headroom report issued by the UE. Based on this difference, the network may take appropriate action. For example, the network may reduce the power transmitted by the UE, such as by reducing the number of resource blocks transmitted by the UE, in an instance in the which the expected output power to be transmitted by the UE for uplink transmissions approximates or is close to the configured maximum output power of the UE. Alternatively, the network may increase the power transmitted by the UE, such as by increasing the number of resource blocks transmitted by the UE, in an instance in which the expected output power transmitted by the UE is appreciably less than the configured maximum output power of the UE.

The UE determines the PUSCH transmission power $P_{PUSCH, b, f, c}$ on an active bandwidth part b for carrier f of serving cell c based on the following equation (1):

$$P_{\mathrm{PUSCH},b,f,c}(i,j,q_d,l) = \min \left\{ \begin{array}{l} P_{\mathrm{CMAX},f,c}(i), \\ P_{\mathrm{O\_PUSCH},b,f,c}(j) + 10\log_{10}(2^{\mu} \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \end{array} \right\}$$

wherein the foregoing parameters are defined by TS 38.213, but, more generally, $P_0$ is the target power that the base station wants to receive, M is bandwidth of the PUSCH resource assignment expressed in the number of resource blocks, $\alpha$ is an adjustment parameter for PL, PL is a downlink pathloss estimate in decibels (dB) calculated by the UE using reference signals (RS), $\Delta_{TF}$ is an offset parameter dependent on the modulation and coding scheme, f is the PUSCH power control adjustment state, i is the PUSCH transmission occasion, j is a parameter set configuration index that a serving cell c is using, $q_d$ is the RS index and l is the PUSCH power control adjustment state index.

The upper term $P_{CMAX, f, c}$ of the foregoing equation (1) is the configured maximum output power of the UE and generally represents the largest power that the UE can achieve under certain conditions, such as the number of allocated resource blocks, the position of the resource blocks and the modulation and coding scheme (MCS). The lower term of the foregoing equation (1) includes a sum that generally represents the power that is actually required by the UE to enable the network to receive the PUSCH by the UE with required power level taking into account pathloss, etc. As a result, if the upper term $P_{CMAX, f, e}$ of the foregoing equation (1) is larger than the lower term, power remains that the UE is capable of providing, but that is not currently being utilized under the current conditions. In this situation, the network may consider altering the conditions defining the uplink transmission, such as by increasing the number of resource blocks being transmitted, so as to increase the power expended by the UE in relation to the uplink transmission. Conversely, an instance in which the upper and lower terms of the foregoing equation (1) are similar or approximately equal, the network may consider altering the conditions governing the uplink transmission in order to reduce the actual output power of the UE, such as by reducing the number of resource blocks being transmitted.

The upper term $P_{CMAX, f, c}$ in the foregoing equation (1) is the configured maximum output power of the UE for carrier f of a serving cell c in a respective slot. The configured maximum output power is delimited by the following upper and lower boundaries:

$$P_{\mathrm{CMAX\_L},f,c} \leq P_{\mathrm{CMAX},f,c} \leq P_{\mathrm{CMAX\_H},f,c}$$

The lower boundary $P_{CMAX\_l,f,c}$ and the upper boundary $P_{CMAX\_h,f,c}$ are, in turn, defined by section 6.2.4 of TS 38.101-1 as follows:

$$P_{CMAX\_L,f,c} = MIN\ \{P_{EMAX,c} - \Delta T_{C,c},\ (P_{PowerClass} - \Delta P_{PowerClass}) - MAX(MAX(MPR_c + \Delta MPR_c, A\text{-}MPR_c) + \Delta T_{IB,c} + \Delta T_{C,c} + \Delta T_{RxSRS}, P\text{-}MPR_c)\ \}$$

$$P_{CMAX\_H,f,c} = MIN\ \{P_{EMAX,c},\ P_{PowerClass} - \Delta P_{PowerClass}\}$$

The upper and lower boundaries are defined by a plurality of terms which are defined by TS 38.101-1. More generally, the terms of the upper and lower boundaries include $P_{EMAX,c}$ which is the value defined by the p-Max information element (IE) or the field additionalPmax of the NR-NS-PmaxList IE, $P_{PowerClass}$ refers to a user equipment power class that defines a maximum power per operating band, MIN and MAX are functions that identify a smallest and largest value, respectively, of a set of values, $MPR_c$ refers to a maximum power reduction for the serving cell c that allows the user equipment to reduce the maximum output power due to higher order modulations and transmit bandwidth configurations, $\Delta MPR_c$ is an additional maximum power reduction to allow the user equipment to use a specific user equipment channel bandwidth for a specific operating band, $A\text{-}MPR_c$ is another additional maximum power reduction that allows the user equipment to reduce maximum output power to satisfy a specific regulatory requirement applicable to a certain region or country, $\Delta T_{IB,c}$ is an additional tolerance for the serving cell c applicable to the user equipment that supports carrier aggregation including the serving cell, $\Delta T_{C,c}$ is an additional tolerance for the serving cell c applicable when transmission bandwidths are confined within a certain region in a specific operating band frequency range, $\Delta T_{RxSRS}$ is an additional tolerance for the serving cell c applicable during sounding reference signal (SRS) transmission occasions with usage in an SRS-ResourceSet set as 'antennaSwitching' and $P\text{-}MPR_c$ is a power management maximum power reduction for the serving cell c that is allowed for the user equipment to ensure compliance to one or more regulations and to address at least some unwanted emissions that are not accommodated by the defined relaxation terms in 3GPP specifications.

As noted above and based on the upper and lower boundaries, the UE may provide the power headroom report that includes the configured maximum output power of the UE, which is selected in the range defined by the lower and upper boundaries.

By way of a more particular example of a UE operating in power class 1.5 and utilizing two transmission chains, where each transmission chain can deliver 26 dBm at each physical antenna connector, $P_{EMAX,c}$ may be 29 dBm $P_{PowerClass}$ may be 29 dBm and $\Delta P_{PowerClass}$ may be 0 dB. In an instance in which the definitions for the upper and lower boundaries have been simplified by eliminating terms that are applicable under more specific conditions with respect to the calculation of the upper and lower boundaries, the upper and lower boundaries may be expressed as follows:

$$P_{CMAX\_L,f,c} = MIN\ \{P_{EMAX,c},\ (P_{PowerClass} - \Delta P_{PowerClass}) - MPR\}$$

$$P_{CMAX\_H,f,c} = MIN\ \{P_{EMAX,c},\ P_{PowerClass} - \Delta P_{PowerClass}\}$$

The simplified definitions for the upper and lower boundaries are therefore for all the bands since the terms that are applicable only for some, but not all bands have been eliminated including, for example, A-MPR which is applicable to some specific bands in a certain country and $\Delta T_{IB}$ which is applied when a UE implements carrier aggregation (CA).

In this example, the maximum power reduction (MPR) is defined based on the power class, such as power class 1.5 in the foregoing example, and also based on the number of transmission chains for the UE, such as two transmission chains in the foregoing example. As such, the range that the UE can report as the configured maximum output power $P_{CMAX,f,c}$ is defined as follows:

$$29\ dBm - MPR_{1.5,\ 2Tx} \leq P_{CMAX,f,c} \leq 29\ dBm$$

wherein $MPR_{1.5,2Tx}$ is the maximum power reduction for a UE operating in accordance with power class 1.5 with two transmission chains.

Continuing with this example, if the UE supports *fullpowerMode1* and the network configures the UE to the *fullpowerMode 1* with transmitted precoding matric identifier (TPMI) 2 $[1\ 1]T$, the achievable power of the user equipment is 29 dBm since the scaling factor s is 1. Hence, the user equipment can indicate the configured maximum output power $P_{CMAX,f,c}$ to be between the upper and lower boundaries as defined above as the configured maximum output power $P_{CMAX,f,c}$ will not exceed the achievable power of the UE. More particularly, in an instance in which the MPR for power class 1.5 having two transmission chains is defined by Table 6.2D.2-2 of TS 38.101-1 as follows:

| Modulation | | MPR (dB) | | |
|---|---|---|---|---|
| | | Edge RB allocations | Outer RB allocations | Inner RB allocations |
| DFT-s-OFDM | Pi/2 BPSK | ≤ 6 | ≤ [2] | ≤ 0.5 |
| | QPSK | ≤ 6.5 | ≤ [2.5] | ≤ 0.5 |
| | 16 QAM | ≤ 6.5 | ≤ [3.5] | ≤ 1.5 |
| | 64 QAM | ≤ 6.5 | ≤ [4] | ≤ 3.5 |
| | 256 QAM | ≤ 6.5 | ≤ 6.5 | ≤ [6.5] |
| CP-OFDM | QPSK | ≤ 6.5 | ≤ [4.5] | ≤ 2 |
| | 16 QAM | ≤ 6.5 | ≤ [4.5] | ≤ 2.5 |
| | 64 QAM | ≤ 6.5 | ≤ [5] | ≤ 4.5 |
| | 256 QAM | ≤ 8.5 | ≤ 8.5 | ≤ [8.5] |

With reference to the foregoing table, if a network schedules inner resource block allocations with cyclic prefix orthogonal frequency division multiplexing (CP-OFDM) quadrature phase shift keying (QPSK), the MPR can range up to 2 dB. In this example, the configured maximum output power of the UE therefore lies between a lower boundary of 27 dBm and an upper boundary of 29 dBm, neither of which is greater than the achievable power of the UE.

However if the network configures the same UE with *fullpowerMode 1* with TPMI 0 $[1\ 0]^T$ or TPMI 1 $[0\ 1]^T$, in order to utilize only one of the antenna ports of the UE, the achievable power of the user equipment becomes 26 dBm since the user equipment uses only one of its power amplifiers and the corresponding scaling factor becomes one half (1/2). In this situation the applicable MPR is the MPR defined for power class 2 having one transmission chain. However, the governing specification is unclear as to whether the UE is allowed to use the MPR for one transmission chain for power class 2, the MPR for two transmission chains for power class 2 or the MPR for two transmission chains for power class 1.5. If the MPR of power class (PC) 1.5 for TPMI 0 or TPMI 1 is treated in the same manner as TPMI 2, based on an $MPR_{1.5,2Tx}$ of no greater than 2 dB from Table 6.2D.2-2, the configured maximum output power remains limited in this example between 27 dBm and 29 dBm. However, if the maximum output power is scaled to power class 2 from power class 1.5 according to the scaling factor of ½ and the corresponding MPR is treated as $MPR_{2,1Tx}$, the MPR for one transmission chain for power class 2 is governed by Table 6.2.2-2 of TS 38.101-1 as follows:

| Modulation | | MPR (dB) | | |
|---|---|---|---|---|
| | | Edge RB allocations | Outer RB allocations | inner RB allocations |
| DFT-s-OFDM | Pi/2 BPSK | ≤ 3.5 | ≤ 0.5 | 0 |
| | QPSK | ≤ 3.5 | ≤ 1 | 0 |
| | 16 QAM | ≤ 3.5 | ≤ 2 | ≤ 1 |
| | 64 QAM | ≤ 3.5 | ≤ 2.5 | |
| | 256 QAM | ≤ 4.5 | | |
| CP-OFDM | QPSK | ≤ 3.5 | ≤ 3 | ≤ 1.5 |
| | 16 QAM | ≤ 3.5 | ≤ 3 | ≤ 2 |
| | 64 QAM | ≤ 3.5 | | |
| | 256 QAM | ≤ 6.5 | | |

In an instance in which the network schedules other resource block allocations with CP-OFDM QPSK for the UE, the MPR ranges up to 1.5 dB. Thus, the configured maximum output power of the UE is between a lower boundary of 24.5 dBm, that is, 26 dBm minus 1.5 dBm and an upper boundary of 26 dBm. However, TS 38.101-1 does not allow power class fallback depending upon the TMPI configurations such that the power class of 1.5 remains. Thus, the configured maximum output power lies between a lower boundary of 27 dBm, that is, 29 dBm minus 2 dB as defined by the MPR$_{1.5,2\,Tx}$ and an upper boundary of 29 dBm, even in an instance in which a single antenna port is used pursuant to a TPMI 0 or 1 configuration. Thus, the UE will be unable to achieve the power expected by TS 38.101-1.

In this situation, the UE may report a configured maximum output power value between 27 dBm and 29 dBm even though the UE cannot achieve the reported range of power values. This situation results in fundamental errors relating to the power headroom report since the configured maximum output power is a reference value for the network with the network potentially modifying the conditions of the UL transmission based thereupon. However, the UE cannot actually achieve the configured maximum output power such that the power headroom is overestimated.

One option for addressing this situation involves the UE utilizing a lower tolerance of 2 dB such that the UE will pass the configured maximum output power requirement even if the configured maximum output power P$_{CMAX,f,c}$ as reduced by 2 dB equals 25 (27 dBm - 2 dB) dBm and the UE reports 27 dBm as the configured maximum output power so long as the UE transmits on the UL with a power of 25 dBm or greater. In this example, the UE may be able to achieve more than 25 dBm, but the UE can only utilize an MPR of 1 dB if 25 dBm is targeted. Thus, the UE cannot effectively target 25 dBm since there is no lower boundary such that user equipment practically needs to target a higher power level, thereby also imposing constraints on the design of the UE.

In accordance with another option, the UE may utilize antenna virtualization so as to pretend as if two transmission chains were a single transmission chain. In this instance, the UE can achieve the same output power as that for TPM 2. However, this configuration is not the expected behavior of the UE if the UE applies the aforementioned scaling factor defined in TS 38.213 to the output power.

In addition to the issues noted above with respect to the foregoing options, the expected behavior of the UE may not be clear and the network therefore may not be able to distinguish the behavior of the UE in advance. Thus, the network cannot make use of the inherited capability of the UE and the network cannot properly schedule the length of resource blocks, the position of resource blocks, the MCS and other conditions of the uplink transmission by the UE. The issues described above may become even more significant as the number of transmission chains implemented by the UE increases.

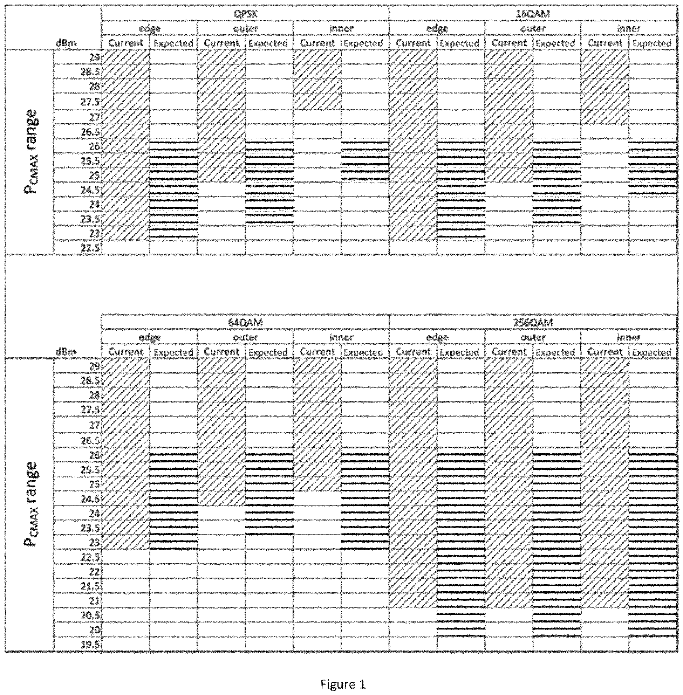

The current range of configured maximum output power for a UE for various types of resource blocks, e.g., edge resource blocks, outer resource blocks and inner resource blocks, for different modulation and coding schemes are defined by RAN4 specification and are depicted with right leaning cross hatching in Figure 1 to the left of the expected range of configured maximum output power for the UE based on the RAN1 specification as represented by the horizontal lines in Figure 1. In other words, if the RAN4 specification is followed for fullpowermod1, the configured maximum output power range is the range represented by the cross hatching, while if the RAN1 specification is followed for fullpowermode1, the configured maximum output power range is the range represented by horizontal lines. As shown in Figure 1, the range of current configured maximum output power values is inconsistent relative to the expected performance of a UE as defined by the expected range of configured maximum output power for a single transmission chain. As a result of the differences between the current and expected ranges of configured maximum output power values for the UE with a single transmission chain, the network may not accurately identify the available power, if any, from the power headroom report such that the network may not be able to properly adjust the conditions associated with the uplink transmission, such as in terms of the number of resource blocks, the position of the resource blocks, the MCS, etc. in the most efficient and accurate manner.

BRIEF SUMMARY

A method, apparatus and computer program product are provided in accordance with an example embodiment to adjust at least one boundary and, in some embodiments, both the upper and lower boundaries of the configured maximum output power of a UE based on a scaling factor. By adjusting at least one boundary and, in some embodiments, both the upper and lower boundaries, the configured maximum output power of the UE as defined between the boundaries may be a more accurate representation in various implementations including, for example, in an implementation in which a UE utilizes a single transmission chain. As a result, the network receives and can act upon more accurate information regarding the configured maximum output power of the UE and may make a more informed and accurate determination as to the additional power, if any, available for uplink transmission by the UE. As such, the network can define the UL transmission conditions to more efficiently utilize the output power of the UE, such as by controllably adjusting the number of resource blocks, the position of the resource blocks, the MCS, etc. based upon the more accurate estimate of the configured maximum output power of the UE provided in accordance with an example embodiment.

In an example embodiment, a method is provided that includes determining a configured maximum output power of a user equipment in a respective slot for a carrier of a serving cell based on at least one boundary. The at least one boundary is determined based at least partly upon a scaling factor dependent upon a number of antenna ports having a non-zero transmission power on a physical uplink shared channel (PUSCH). The method also includes reporting the determined configured maximum output power to a network node operating the serving cell. at least one processor.

In another example embodiment, an apparatus is provided that includes at least one processor and at least one memory storing instructions that, when executed by the at least one processor, cause the apparatus at least to perform determining a configured maximum output power of a user equipment in a respective slot for a carrier of a serving cell based on at least one boundary. The at least one boundary is determined based at least partly upon a scaling factor dependent upon a number of antenna ports having a non-zero transmission power on a physical uplink shared channel (PUSCH). The instructions, when executed by the at least one processor also cause the apparatus to perform reporting the determined configured maximum output power to a network node operating the serving cell.

In a further example embodiment, a computer program product is provided that includes at least one non-transitory computer readable storage medium having computer executable program code instructions stored therein with the computer executable program code instructions comprising program code instructions configured, upon execution, to determine a configured maximum output power of a user equipment in a respective slot for a carrier of a serving cell based on at least one boundary. The at least one boundary is determined based at least partly upon a scaling factor dependent upon a number of antenna ports having a non-zero transmission power on a physical uplink shared channel (PUSCH). The program code instructions are also configured, upon execution, to report the determined configured maximum output power to a network node operating the serving cell.

In yet another example embodiment, an apparatus is provided that includes means for determining a configured maximum output power of a user equipment in a respective slot for a carrier of a serving cell based on at least one boundary. The at least one boundary is determined based at least partly upon a scaling factor dependent upon a number of antenna ports having a non-zero transmission power on a physical uplink shared channel (PUSCH). The apparatus also includes means for reporting the determined configured maximum output power to a network node operating the serving cell.

In the context of a method, apparatus and computer program product, the at least one boundary of an example embodiment includes both a lower boundary and an upper boundary for the configured maximum output power of the user equipment based at least partly upon the scaling factor. In an example embodiment, the at least one boundary is determined based at least partly upon a parameter $\Delta P_S$, and wherein $\Delta P_S$ equals 10*log (1/s) with s representing the scaling factor. In this example embodiment, the at least one boundary may also be determined based at least partly upon a relationship of a parameter $\Delta P_{PowerClass}$ to a predefined threshold. In an instance in which the predefined threshold is 0 dB and in which $\Delta P_{PowerClass}$ is greater than or equal to 0 dB, a lower boundary of this example embodiment may be determined as a minimum of a plurality of terms with one of the terms being defined as:

$$(P_{PowerClass} - MAX(\Delta P_S, \Delta P_{PowerClass})) - MAX(MAX(MPR_c + \Delta MPR_c, A\text{-}MPR_c) + \Delta T_{IB,c} + \Delta T_{C,c} + \Delta T_{RxSRS}, P\text{-}MPR_c),$$

wherein $P_{PowerClass}$ refers to a user equipment power class that defines a maximum power per operating band, MAX is a function that identifies a largest value of a set of values, $MPR_c$ refers to a maximum power reduction for the serving cell c that allows the user equipment to reduce the maximum output power due to higher order modulations and transmit bandwidth configurations, $\Delta MPR_c$ is an additional maximum power reduction to allow the user equipment to use a specific user equipment channel bandwidth for a specific operating band, $A\text{-}MPR_c$ is another additional maximum power reduction that allows the user equipment to reduce maximum output power to satisfy a specific regulatory requirement applicable to a certain region or country, $\Delta T_{IB,c}$ is an additional tolerance for the serving cell applicable to the user equipment that supports carrier aggregation including the serving cell, $\Delta T_{C,c}$ is an additional tolerance for the serving cell applicable when transmission bandwidths are confined within a certain region in a specific operating band frequency range, $\Delta T_{RxSRS}$ is an additional tolerance for the serving cell applicable during sounding reference signal (SRS) transmission occasions with usage in an SRS-ResourceSet set as 'antennaSwitching' and $P\text{-}MPR_c$ is a power management maximum power reduction for the serving cell that is allowed for the user equipment to ensure compliance to one or more regulations and to address at least some emissions.

In an instance in which the predefined threshold is 0 dB and in which $\Delta P_{PowerClass}$ is greater than or equal to 0 dB, an upper boundary may be determined as a minimum of a plurality of terms with one of the terms being defined as:

$$P_{PowerClass} - MAX(\Delta P_S, \Delta P_{PowerClass}),$$

wherein $P_{PowerClass}$ refers to a user equipment power class that defines a maximum power per operating band and MAX is a function that identifies a largest value of a set of values.

Conversely, in an instance in which the predefined threshold is 0 dB and in which $\Delta P_{PowerClass}$ is less than 0 dB, a lower boundary is determined as a minimum of a plurality of terms with one of the terms being defined as:

$$(P_{PowerClass} - \Delta P_S \cdot \Delta P_{PowerClass})) - MAX(MAX(MPR_c + \Delta MPR_c, A\text{-}MPR_c) + \Delta T_{IB,c} + \Delta T_{C,c} + \Delta T_{RxSRS}, P\text{-}MPR_c),$$

wherein $P_{PowerClass}$ refers to a user equipment power class that defines a maximum power per operating band, MAX is a function that identifies a largest value of a set of values, $MPR_c$ refers to a maximum power reduction for the serving cell c that allows the user equipment to reduce the maximum output power due to higher order modulations and transmit bandwidth configurations, $\Delta MPR_c$ is an additional maximum power reduction to allow the user equipment to use a specific user equipment channel bandwidth for a specific operating band, $A\text{-}MPR_c$ is another additional maximum power reduction that allows the user equipment to reduce maximum output power to satisfy a specific regulatory requirement applicable to a certain region or country, $\Delta T_{IB,c}$ is an additional tolerance for the serving cell applicable to the user equipment that supports carrier aggregation including the serving cell, $\Delta T_{C,c}$ is an additional tolerance for the serving cell applicable when transmission bandwidths are confined within a certain region in a specific operating band frequency range, $\Delta T_{RxSRS}$ is an additional tolerance for the serving cell applicable during sounding reference signal (SRS) transmission occasions with usage in an SRS-ResourceSet set as 'antennaSwitching' and $P\text{-}MPR_c$ is a power management maximum power reduction for the serving cell that is allowed for the user equipment to ensure compliance to one or more regulations and to address at least some emissions.

In an instance in which the predefined threshold is 0 dB and in which $\Delta P_{PowerClass}$ is less than 0 dB, an upper boundary may be determined as a minimum of a plurality of terms with one of the terms being defined as:

$$P_{PowerClass} - (\Delta P_S \cdot \Delta P_{PowerClass}),$$

wherein $P_{PowerClass}$ refers to a user equipment power class that defines a maximum power per operating band.

In an instance in which a power boosting feature with transmission diversity is supported or enabled, $\Delta P_S$ may be set to $\Delta P_S \cdot \Delta P_{St}$, wherein $s_t$ is a ratio of a number of antennas in use for a band to a number of antennas supported for the band, and wherein $\Delta P_{St} = 10*\log(1/s_t)$. In an example embodiment, the scaling factor is representative of a ratio of the number of antenna ports having the non-zero transmission power on the physical uplink shared channel (PUSCH) to a maximum number of sounding reference signal (SRS) ports supported by the user equipment in one SRS resource.

BRIEF DESCRIPTION OF THE DRAWINGS

Having thus described certain example embodiments of the present disclosure in general terms, reference will hereinafter be made to the accompanying drawings, which are not drawn to scale, and wherein:

Figure 1 is a graphical representation of the current range of configured maximum output power for a UE for various types of resource blocks for different modulation and coding schemes as defined by RAN4 specification in reference to the expected range of configured maximum output power for the UE based on the RAN1 specification, illustrating the inconsistency therebetween;

Figure 2 is a block diagram of an apparatus that may be configured in accordance with an example embodiment of the present disclosure; and

Figure 3 is a flowchart illustrating operations performed in accordance with an example embodiment of the present disclosure.

DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

The term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of. Furthermore, to the extent that the terms "includes" and "including," and variants thereof are used in either the detailed description or the claims, these terms are intended to be inclusive in a manner similar to the term "comprising".

The phrases "in one embodiment," "according to one embodiment," "in some embodiments," "in various embodiments", and the like generally refer to the fact that the particular feature, structure, or characteristic following the phrase may be included in at least one embodiment of the present disclosure, but not necessarily all embodiments of the present disclosure. Thus, the particular feature, structure, or characteristic may be included in more than one embodiment of the present disclosure such that these phrases do not necessarily refer to the same embodiment.

As used herein, the terms "example," "exemplary," and the like are used to mean "serving as an example, instance, or illustration." Any implementation, aspect, or design described herein as "example" or "exemplary" is not necessarily to be construed as preferred or advantageous over other implementations, aspects, or designs. Rather, use of the terms "example," "exemplary," and the like are intended to present concepts in a concrete fashion.

As used herein, the term "computer-readable medium" refers to non-transitory storage hardware, non-transitory storage device or non-transitory computer system memory that may be accessed by a controller, a microcontroller, a computational system or a module of a computational system to encode thereon computer-executable instructions or software programs. A non-transitory "computer-readable medium" may be accessed by a computational system or a module of a computational system to retrieve and/or execute the computer-executable instructions or software programs encoded on the medium. Examples of non-transitory computer-readable media may include, but are not limited to, one or more types of hardware memory, non-transitory tangible media (for example, one or more magnetic storage disks, one or more optical disks, one or more USB flash drives), computer system memory or random-access memory (such as, DRAM, SRAM, EDO RAM), and the like.

A method, apparatus and computer program product are provided in accordance with an example embodiment in order to determine the configured maximum output power of the UE in a respective slot for a carrier of a serving cell based on at least one boundary and, in one embodiment, based upon both a lower boundary and an upper boundary. Since the at least one boundary, such as the lower boundary and the upper boundary, is determined based at least partly upon a scaling factor dependent upon the number of antenna ports having non-zero transmission power on the PUSCH, the at least one boundary may be more accurately determined for the particular configuration of the UE, such as based upon the number of antenna ports of the UE that would be utilized for uplink transmission. Since the at least one boundary, such as the lower boundary and the upper boundary, is determined more accurately for the particular configuration of the UE, the configured maximum output power of the UE is correspondingly determined more accurately.

Moreover, since the configured maximum output power that is determined is reported to a network node operating the serving cell, the network can better control the conditions associated with the uplink transmission based upon a more accurate determination of the configured maximum output power of the user equipment. For example, the network may more accurately control the number of resource blocks, the position of the resource blocks, the modulation and coding scheme, etc. associated with the uplink transmission based upon the configured maximum output power that has been more accurately determined in accordance with an example embodiment.

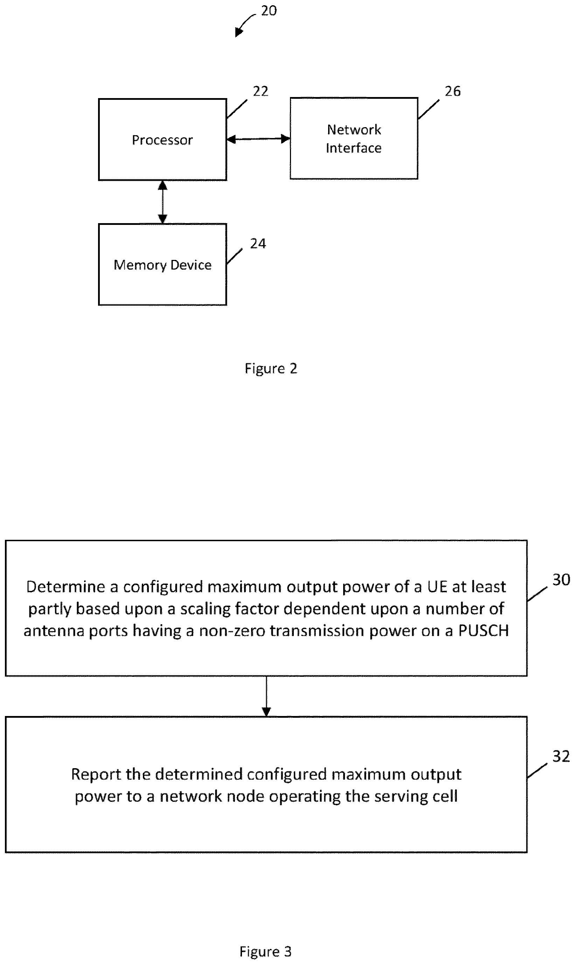

The apparatus of an example embodiment may be embodied by the UE or may otherwise be associated with or in communication with UE. As shown in Figure 2, the apparatus 20 of an example embodiment includes the apparatus may include a processor 22, memory 24, and network interface 26. The apparatus 20 may be configured to execute the operations described herein. Although these components are described with respect to the performance of various functions, it should be understood that the particular implementations necessarily include the use of particular hardware. It should also be understood that certain of these components may include similar or common hardware. For example, two sets of circuitries may both leverage use of the same processor, network interface, storage medium, or the like to perform their associated functions, such that duplicate hardware is not required for each set of circuitries.

In some embodiments, the processor 22 (and/or co-processor or any other processing circuitry assisting or otherwise associated with the processor) may be in communication with the memory 24 via a bus for passing information among components of the apparatus. The memory 24 is non-transitory and may include, for example, one or more volatile and/or non-volatile memories. In other words, for example, the memory 24 may be an electronic storage device (e.g., a computer-readable storage medium). The memory 24 may be configured to store information, data, content, applications, instructions, or the like for enabling the apparatus to carry out various functions in accordance with an example embodiment disclosed herein.

The processor 22 may be embodied in a number of different ways and may, for example, include one or more processing devices configured to perform independently. In some non-limiting embodiments, the processor 22 may include one or more processors configured in tandem via a bus to enable independent execution of instructions, pipelining, and/or multithreading. The use of the term "processor" may be understood to include a single core processor, a multi-core processor, multiple processors internal to the apparatus, and/or remote or "cloud" processors.

In some embodiments, the processor 22 may be configured to execute instructions stored in the memory 24 and/or circuitry otherwise accessible to the processor 22. In some embodiments, the processor 22 may be configured to execute hard-coded functionalities. As such, whether configured by hardware or software methods, or by a combination thereof, the processor 22 may represent an entity (e.g., physically embodied in circuitry) capable of performing operations according to an embodiment disclosed herein while configured accordingly. Alternatively, as another example, when the processor 22 is embodied as an executor of software instructions, the instructions may specifically configure the processor 22 to perform the algorithms and/or operations described herein when the instructions are executed.

In some embodiments, the apparatus 20 may optionally include input/output circuitry that may, in turn, be in communication with processor 22 to provide output to a user and/or other entity and, in some embodiments, to receive an indication of an input. The input/output circuitry may comprise a user interface and may include a display, and may comprise a web user interface, a mobile application, a query-initiating computing device, a kiosk, or the like. In some embodiments, the input/output circuitry may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 24, and/or the like).

The network interface 26 may be any means such as a device or circuitry embodied in either hardware or a combination of hardware and software that is configured to receive and/or transmit data from/to a network and/or any other device, circuitry, or module in communication with the apparatus 20. In this regard, the network interface 26 may include, for example, a network interface for enabling communications with a wired or wireless communication network, such as the user equipment (UE) and/or the base station. For example, the network interface 26 may include one or more network interface cards, antennae, buses, switches, routers, modems, and supporting hardware and/or software, or any other device suitable for enabling communications via a network. Additionally, or alternatively, the network interface 26 may include the circuitry for interacting with the antenna/antennae to cause transmission of signals via the antenna/antennae or to handle receipt of signals received via the antenna/antennae.

Referring now to Figure 3, the operations performed, such as by the apparatus of Figure 2, during uplink transmission, such as PUSCH transmission from a UE to the network and, more particularly, to a network node operating the serving cell for the UE in accordance with an example embodiment are depicted. As shown in block 30, the apparatus of an example embodiment includes means, such as the processor or the like, for determining the configured maximum output power of the UE in a respective slot for a carrier of a serving cell based on at least one boundary. In this regard, the configured maximum output power may be autonomously configured by the UE. The configured maximum output power of the UE may be determined to be within a range based on a lower boundary of the range, an upper boundary of the range, or both the lower and upper boundaries of the range. Regardless of the type of boundary, the at least one boundary is determined based at least partly upon a scaling factor that is dependent upon the number of antenna ports of the UE having a non-zero transmission power on the PUSCH. In one example embodiment, the scaling factor is defined by TS 38.213 and is representative of the ratio of the number of antenna ports having the non-zero transmission power on the PUSCH to a maximum number of sounding reference signal (SRS) ports supported by the UE in one SRS resource.

The at least one boundary may be determined based at least partly upon the scaling factor in various manners, such as by being calculated by the UE or by being based upon values for the boundary that are stored by memory 24 and accessed by the UE with the values for the boundary being dependent upon the values of a plurality of parameters as referenced below in conjunction with the various definitions of the upper and lower boundaries. In one embodiment, however, the at least one boundary is determined in accordance with and based at least partly upon a parameter $\Delta P_s$. In this example embodiment, $\Delta P_s = 10 * \log (1\backslash s)$ with s representing the scaling factor.

In one example embodiment, the at least one boundary is also determined based at least partly upon a relationship of the parameter $\Delta P_{PoweClass}$ to a predefined threshold, such as 0 dB. As noted above, the $\Delta P_{PowerClass}$ refers to an adjustment parameter to maximum output power for a given power class. In one embodiment, $\Delta P_{PowerClass}$ is defined by section 6.2.4 of TS 38.101-1 with $\Delta P_{PowerClass}$ being set equal to a fixed value, such as 0 dB, 3dB, 6 dB, etc. based upon the power class and one or more other conditions. In an example embodiment in which $\Delta P_{PowerClass}$ is greater or equal to the predefined threshold, such as 0 dB, the lower boundary is determined as:

$$P_{CMAX\_L,f,c} = MIN \{P_{EMAX,c} - \Delta T_{C,c}, (P_{PowerClass} - Max (\Delta P_s, \Delta P_{PowerClass})) -$$
$$MAX(MAX(MPR_c + \Delta MPR_c, A\text{-}MPR_c) + \Delta T_{IB,c} + \Delta T_{C,c} + \Delta T_{RxSRS}, P\text{-}MPR_c) \}$$

As shown, the lower boundary $P_{CMAX\_L,f,c}$ is defined as a minimum of a plurality of terms with one of the terms comprising:

$$P_{PowerClass} - Max (\Delta P_s, \Delta P_{PowerClass})$$

In this example embodiment and in the instance in which $\Delta P_{powerclass}$ is greater than or equal to the predefined threshold, such as 0 dB, the upper boundary may be determined as follows:

$$P_{CMAX\_H,f,c} = MIN \{P_{EMAX,c}, P_{PowerClass} - Max (\Delta P_s, \Delta P_{PowerClass})\}$$

As shown, the upper boundary $P_{CMAX\_H,f,c}$ is defined by a minimum of a plurality of terms, one of the terms comprising:

$$P_{PowerClass} - Max (\Delta P_s, \Delta P_{PowerClass})$$

In an example embodiment and based upon the upper and lower boundaries that have been determined as described above, the apparatus, such as the processor, is configured to determine the configured maximum output power of the UE as bounded by the upper and lower boundaries, such as by being greater than or equal to the lower boundary and less than or equal to the upper boundary. By taking into account the number of antenna ports having a non-zero transmission power on the PUSCH as a result of the inclusion of the scaling factor, the boundaries may be more accurately determined for the configuration of the UE and, as a result, the configured maximum output power of the user equipment may be more accurately determined and reported to the network.

In the foregoing example embodiment, but in an instance in which $\Delta P_{PowerClass}$ is less than the predefined threshold, such as 0 dB, the lower boundary may be determined as follows:

$$P_{CMAX\_L,f,c} = MIN \{P_{EMAX,c} - \Delta T_{C,c}, (P_{PowerClass} - \Delta P_s - \Delta P_{PowerClass}) - MAX(MAX(MPR_c + \Delta MPR_c,$$
$$A\text{-}MPR_c) + \Delta T_{IB,c} + \Delta T_{C,c} + \Delta T_{RxSRS}, P\text{-}MPR_c) \}$$

As shown, the lower boundary $P_{CMAX\_L,f,c}$ is defined in this embodiment as a minimum of a plurality of terms with one of the terms comprising:

$$P_{PowerClass} - \Delta P_s - \Delta P_{PowerClass}$$

In this example embodiment and in the instance in which $\Delta P_{PowerClass}$ is less than the predefined threshold, such as 0 dB, the upper boundary may also be determined as follows:

$$P_{CMAX\_H,f,c} = MIN \{P_{EMAX,c}, P_{PowerClass} - \Delta P_s - \Delta P_{PowerClass}\}$$

As shown, the upper boundary $P_{CMAX\_H,f,c}$ is defined by a minimum of a plurality of terms, one of the terms comprising:

$$P_{PowerClass} - \Delta P_s - \Delta P_{PowerClass}$$

As such, the configured maximum output power of this example embodiment in which $\Delta P_{PowerClass}$ is less than the predefined threshold, such as 0 dB, may, in turn, be determined to be bounded by the upper and lower boundaries, such as by being greater than or equal to the lower boundary and less than or equal to upper boundary. Since the upper and lower boundaries have been more accurately determined by taking into account the scaling factor that is dependent upon the number of antenna ports having a non-zero transmission power on the PUSCH, the configured maximum output power of the UE is determined more accurately for the particular configuration of the UE that is performing the uplink transmission. In one embodiment, as a result of the incorporation of the scaling factor into the equations by which the boundaries for the configured maximum output power are determined, the range for the configured maximum output power may be clarified for the network to be the range that actually represents the true ability of the UE as depicted by horizontal lines in Figure 1. By utilizing antenna virtualization in accordance with one embodiment, the performance of the UE may then be modified so as to achieve the larger ranges of configured maximum output power represented by cross hatching in Figure 1.

In another embodiment in which a power boosting feature with transmission diversity is supported and/or enabled, the parameter $\Delta P_S$ is set to be $\Delta P_S - \Delta P_{St}$ in the foregoing equations defining the upper and lower boundaries. In this regard, st is the ratio of the number of antennas in use for a band to a number of antennas supported for the band. The number of antennas in use for a band may be all of the antennas of the UE, or a subset of the total number of antennas of the UE in an instance in which the UE has informed the network that the UE is only utilizing the subset of the antennas or in which the network has instructed the UE to only utilize the subset of the antennas. In addition, $\Delta P_{St}$ is defined to be equal $10*\log(1\backslash st)$. Alternatively, the power boosting feature of transmission diversity is represented by the UE capability of *AVpower-boosting* for a band, where $\Delta P_S$ is set to 0 dB which means that $\Delta P_{St}$ is considered to be equal to $\Delta P_S$.

Referring now to block 32 of Figure 3, the apparatus of an example embodiment also includes means, such as the processor, the network interface or the like, for reporting the configured maximum output power that has been determined to the network node operating the serving cell. As described above, the configured maximum output power that is determined and reported is more accurate for the particular configuration for the UE that is performing the uplink transmission as a result of one or both boundaries being at least partly based on the scaling factor dependent upon the number of antenna ports having a non-zero transmission power on the PUSCH. Thus, the network obtains representative information regarding the configured maximum output power of the UE such that the network can more efficiently maintain or adjust the conditions governing the uplink transmission, such as by increasing or decreasing the number of resource blocks, the position of resource blocks, the modulation and coding scheme, etc. based upon the power headroom, if any, that remains in relation to the configured maximum output power determined for the UE. Although the configured maximum output power may be reported to the network node in various manners, the configured maximum output power may be reported to the network node in a power headroom report in some example embodiments.

Figure 3 illustrates a flowchart depicting operations according to an example embodiment of the present disclosure. It will be understood that each block of the flowchart and combination of blocks in the flowchart may be implemented by various means, such as hardware, firmware, processor, circuitry, and/or communication devices associated with execution of software including one or more program instructions. For example, one or more of the procedures or operations described above may be embodied by computer program instructions. In this regard, the computer program instruction which embody the procedures or operations described above may be stored by a memory 24 of an apparatus (e.g., apparatus 20, UE, etc.) employing an embodiment of the present invention and executed by a processor 22. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart block.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

**Claims**

1. An apparatus comprising:

   at least one processor; and
   at least one memory storing instructions that, when executed by the at least one processor,

cause the apparatus at least to perform:

determining a configured maximum output power of a user equipment in a respective slot for a carrier of a serving cell based on at least one boundary, wherein the at least one boundary is determined based at least partly upon a scaling factor dependent upon a number of antenna ports having a non-zero transmission power on a physical uplink shared channel (PUSCH); and
reporting the determined configured maximum output power to a network node operating the serving cell.

2. An apparatus according to Claim 1, wherein the at least one boundary comprises both a lower boundary and an upper boundary for the configured maximum output power of the user equipment based at least partly upon the scaling factor, wherein the at least one boundary is determined based at least partly upon a parameter $\Delta P_S$, and wherein $\Delta P_S$ equals 10*log (1/s) with s representing the scaling factor, wherein the at least one boundary is also determined based at least partly upon a relationship of a parameter $\Delta P_{PowerClass}$ to a predefined threshold.

3. An apparatus according to Claim 2, wherein the predefined threshold is 0 dB, and wherein, in an instance in which $\Delta P_{PowerClass}$ is greater than or equal to 0 dB, a lower boundary is determined as a minimum of a plurality of terms with one of the terms being defined as:

$$\left(P_{PowerClass} - MAX(\Delta P_S, \Delta P_{PowerClass})\right) - MAX(MAX(MPR_c + \Delta MPR_c, \text{A-}MPR_c) + \Delta T_{IB,c} + \Delta T_{C,c} + \Delta T_{RxSRS}, \text{P-}MPR_c),$$

wherein $P_{PowerClass}$ refers to a user equipment power class that defines a maximum power per operating band, MAX is a function that identifies a largest value of a set of values, $MPR_c$ refers to a maximum power reduction for the serving cell c that allows the user equipment to reduce the maximum output power due to higher order modulations and transmit bandwidth configurations, $\Delta MPR_c$ is an additional maximum power reduction to allow the user equipment to use a specific user equipment channel bandwidth for a specific operating band, $\text{A-}MPR_c$ is another additional maximum power reduction that allows the user equipment to reduce maximum output power to satisfy a specific regulatory requirement applicable to a certain region or country, $\Delta T_{IB,c}$ is an additional tolerance for the serving cell applicable to the user equipment that supports carrier aggregation including the serving cell, $\Delta T_{C,c}$ is an additional tolerance for the serving cell applicable when transmission bandwidths are confined within a certain region in a specific operating band frequency range, $\Delta T_{RxSRS}$ is an additional tolerance for the serving cell applicable during sounding reference signal (SRS) transmission occasions with usage in an SRS-ResourceSet set as 'antennaS-witching' and $\text{P-}MPR_c$ is a power management maximum power reduction for the serving cell that is allowed for the user equipment to ensure compliance to one or more regulations and to address at least some emissions.

4. An apparatus according to Claim 2, wherein the predefined threshold is 0 dB, and wherein, in an instance in which $\Delta P_{PowerClass}$ is greater than or equal to 0 dB, an upper boundary is determined as a minimum of a plurality of terms with one of the terms being defined as:

$$P_{PowerClass} - MAX(\Delta P_S, \Delta P_{PowerClass}),$$

wherein $P_{PowerClass}$ refers to a user equipment power class that defines a maximum power per operating band and MAX is a function that identifies a largest value of a set of values.

5. An apparatus according to Claim 2, wherein the predefined threshold is 0 dB, and wherein, in an instance in which $\Delta P_{PowerClass}$ is less than 0 dB, a lower boundary is determined as a minimum of a plurality of terms with one of the terms being defined as:

$$\left(P_{PowerClass} - \Delta P_S - \Delta P_{PowerClass}\right) - MAX(MAX(MPR_c + \Delta MPR_c, \text{A-}MPR_c) + \Delta T_{IB,c} + \Delta T_{C,c} + \Delta T_{RxSRS}, \text{P-}MPR_c),$$

wherein $P_{PowerClass}$ refers to a user equipment power class that defines a maximum power per operating band, MAX is a function that identifies a largest value of a set of values, $MPR_c$ refers to a maximum power reduction for the serving cell c that allows the user equipment to reduce the maximum output power due to higher order modulations and transmit bandwidth configurations, $\Delta MPR_c$ is an additional maximum power reduction to allow the user equipment to use a specific user equipment channel bandwidth for a specific operating band, $\text{A-}MPR_c$ is another additional maximum power reduction that allows the user equipment to reduce maximum output power to satisfy a specific regulatory requirement applicable to a certain region or country, $\Delta T_{IB,C}$ is an additional tolerance for the serving cell applicable to the user equipment that supports carrier aggregation including the serving cell, $\Delta T_{C,c}$ is an additional tolerance for the serving cell applicable when transmission bandwidths are confined within a certain region in a specific operating band frequency range, $\Delta T_{RxSRS}$ is an additional tolerance for the serving cell applicable during sounding reference signal (SRS) transmission occasions with usage in an SRS-ResourceSet set as 'antennaSwitching' and P-MPR$_c$ is a power management maximum power reduction for the serving cell that is allowed for the user equipment to ensure compliance to one or more regulations and to address at least some emissions.

6. An apparatus according to Claim 2, wherein the predefined threshold is 0 dB, and wherein, in an instance in which $\Delta P_{PowerClass}$ is less than 0 dB, an upper boundary is determined as a minimum of a plurality of terms with one of the terms being defined as:

$$P_{PowerClass} - (\Delta P_S - \Delta P_{PowerClass}),$$

wherein $P_{PowerClass}$ refers to a user equipment power class that defines a maximum power per operating band.

7. An apparatus according to Claim 2, wherein, in an instance in which a power boosting feature with transmission diversity is supported or enabled, $\Delta P_S$ is set to $\Delta P_S - \Delta P_{St}$, wherein $s_t$ is a ratio of a number of antennas in use for a band to a number of antennas supported for the band, and wherein $\Delta P_{St} = 10*\log(1/s_t)$.

8. An apparatus according to any of Claims 1 to 7, wherein the scaling factor is representative of a ratio of the number of antenna ports having the non-zero transmission power on the physical uplink shared channel (PUSCH) to a maximum number of sounding reference signal (SRS) ports supported by the user equipment in one SRS resource.

9. A method comprising:

determining a configured maximum output power of a user equipment in a respective slot for a carrier of a serving cell based on at least one boundary, wherein the at least one boundary is determined based at least partly upon a scaling factor dependent upon a number of antenna ports having a non-zero transmission power on a physical uplink shared channel (PUSCH); and
reporting the determined configured maximum output power to a network node operating the serving cell.

10. A method according to Claim 9, wherein the at least one boundary comprises both a lower boundary and an upper boundary for the configured maximum output power of the user equipment based at least partly upon the scaling factor, wherein the at least one boundary is determined based at least partly upon a parameter $\Delta P_S$, and wherein $\Delta P_S$ equals 10*log (1/s) with s representing the scaling factor, wherein the at least one boundary is also determined based at least partly upon a relationship of a parameter $\Delta P_{PowerClass}$ to a predefined threshold.

11. A method according to Claim 10, wherein the predefined threshold is 0 dB, and wherein, in an instance in which $\Delta P_{PowerClass}$ is greater than or equal to 0 dB, a lower boundary is determined as a minimum of a plurality of terms with one of the terms being defined as:

$$(P_{PowerClass} - MAX(\Delta P_S, \Delta P_{PowerClass})) - MAX(MAX(MPR_c + \Delta MPR_c, A\text{-}MPR_c) + \Delta T_{IB,c} + \Delta T_{C,c} + \Delta T_{RxSRS}, P\text{-}MPR_c),$$

wherein $P_{PowerClass}$ refers to a user equipment power class that defines a maximum power per operating band, MAX is a function that identifies a largest value of a set of values, MPR$_c$ refers to a maximum power reduction for the serving cell c that allows the user equipment to reduce the maximum output power due to higher order modulations and transmit bandwidth configurations, $\Delta MPR_c$ is an additional maximum power reduction to allow the user equipment to use a specific user equipment channel bandwidth for a specific operating band, A-MPR$_c$ is another additional maximum power reduction that allows the user equipment to reduce maximum output power to satisfy a specific regulatory requirement applicable to a certain region or country, $\Delta T_{IB,c}$ is an additional tolerance for the serving cell applicable to the user equipment that supports carrier aggregation including the serving cell, $\Delta T_{C,c}$ is an additional tolerance for the serving cell applicable when transmission bandwidths are confined within a certain region in a specific operating band frequency range, $\Delta T_{RxSRS}$ is an additional tolerance for the serving cell applicable during sounding reference signal (SRS) transmission occasions with usage in an SRS-ResourceSet set as 'antennaSwitching' and P-MPR$_c$ is a power management maximum power reduction for the serving cell that is allowed for the user equipment to ensure compliance to one or more regulations and to address at least some emissions.

**12.** A method according to Claim 10, wherein the predefined threshold is 0 dB, and wherein, in an instance in which $\Delta P_{PowerClass}$ is greater than or equal to 0 dB, an upper boundary is determined as a minimum of a plurality of terms with one of the terms being defined as:

$$P_{PowerClass} - MAX(\Delta P_S, \Delta P_{PowerClass}),$$

wherein P$_{PowerClass}$ refers to a user equipment power class that defines a maximum power per operating band and MAX is a function that identifies a largest value of a set of values.

**13.** A method according to Claim 10, wherein the predefined threshold is 0 dB, and wherein, in an instance in which $\Delta P_{PowerClass}$ is less than 0 dB, a lower boundary is determined as a minimum of a plurality of terms with one of the terms being defined as:

$$(P_{PowerClass} - \Delta P_S - \Delta P_{PowerClass})) - MAX(MAX(MPR_c + \Delta MPR_c, A\text{-}MPR_c) + \Delta T_{IB,c} + \Delta T_{C,c} + \Delta T_{RxSRS}, P\text{-}MPR_c),$$

wherein P$_{PowerClass}$ refers to a user equipment power class that defines a maximum power per operating band, MAX is a function that identifies a largest value of a set of values, MPR$_c$ refers to a maximum power reduction for the serving cell c that allows the user equipment to reduce the maximum output power due to higher order modulations and transmit bandwidth configurations, $\Delta$MPR$_c$ is an additional maximum power reduction to allow the user equipment to use a specific user equipment channel bandwidth for a specific operating band, A-MPR$_c$ is another additional maximum power reduction that allows the user equipment to reduce maximum output power to satisfy a specific regulatory requirement applicable to a certain region or country, $\Delta$T$_{IB,c}$ is an additional tolerance for the serving cell applicable to the user equipment that supports carrier aggregation including the serving cell, $\Delta$T$_{C,c}$is an additional tolerance for the serving cell applicable when transmission bandwidths are confined within a certain region in a specific operating band frequency range, $\Delta$T$_{RxSRS}$ is an additional tolerance for the serving cell applicable during sounding reference signal (SRS) transmission occasions with usage in an SRS-ResourceSet set as 'antennaSwitching' and P-MPR$_c$ is a power management maximum power reduction for the serving cell that is allowed for the user equipment to ensure compliance to one or more regulations and to address at least some emissions.

**14.** A method according to Claim 10, wherein the predefined threshold is 0 dB, and wherein, in an instance in which $\Delta P_{PowerClass}$ is less than 0 dB, an upper boundary is determined as a minimum of a plurality of terms with one of the terms being defined as:

$$P_{PowerClass} - (\Delta P_S - \Delta P_{PowerClass}),$$

wherein P$_{PowerClass}$ refers to a user equipment power class that defines a maximum power per operating band.

**15.** A method according to Claim 10, wherein, in an instance in which a power boosting feature with transmission diversity is supported or enabled, $\Delta P_S$ is set to $\Delta P_S - \Delta P_{St}$, wherein $s_t$ is a ratio of a number of antennas in use for a band to a number of antennas supported for the band, and wherein $\Delta P_{St} = 10*\log(l/s_t)$.

Figure 1

20

Figure 2

Determine a configured maximum output power of a UE at least partly based upon a scaling factor dependent upon a number of antenna ports having a non-zero transmission power on a PUSCH

30

Report the determined configured maximum output power to a network node operating the serving cell

32

Figure 3

Europäisches
Patentamt

European
Patent Office

Office européen
des brevets

# EUROPEAN SEARCH REPORT

Application Number

EP 24 16 3269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/161289 A1 (ERICSSON TELEFON AB L M [SE]) 19 August 2021 (2021-08-19) | 1,2,9,10 | INV. H04W52/36 |
| A | * paragraph [0090] - paragraph [0111] * | 3-8, 11-15 | ADD. H04W52/14 |
| | - - - - - | | |
| A | "3rd Generation Partnership Project; Technical Specification Group Radio Access Network; NR; User Equipment (UE) radio transmission and reception; Part 1: Range 1 Standalone (Release 18)", 3GPP STANDARD; TECHNICAL SPECIFICATION; 3GPP TS 38.101-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. V18.1.0 7 April 2023 (2023-04-07), pages 302-564, XP052284750, Retrieved from the Internet: URL:https://ftp.3gpp.org/Specs/archive/38_series/38.101-1/38101-1-i10.zip 38101-1-i10_s06-06.docx [retrieved on 2023-04-07] * the whole document * | 1-15 | |
| | - - - - - | | **TECHNICAL FIELDS SEARCHED (IPC)** |
| | | | H04W |
| | -/-- | | |

The present search report has been drawn up for all claims

| Place of search | Date of completion of the search | Examiner |
|---|---|---|
| The Hague | 16 August 2024 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 16 3269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN CHENG ET AL: "Discussion on the UE SRS IL imbalance issue", 3GPP DRAFT; R1-2303860; TYPE DISCUSSION; NR_ENDC_RF_FR1_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. 3GPP RAN 1, no. Online; 20230417 - 20230426 7 April 2023 (2023-04-07), XP052294408, Retrieved from the Internet: URL:https://www.3gpp.org/ftp/TSG_RAN/WG1_RL1/TSGR1_112b-e/Docs/R1-2303860.zip R1-2303860.docx [retrieved on 2023-04-07] * the whole document * | 1-15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 16 August 2024 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3269

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2024

| Patent document cited in search report | | Publication date | Patent family member(s) | | Publication date |
|---|---|---|---|---|---|
| WO 2021161289 | A1 | 19-08-2021 | EP | 4104297 A1 | 21-12-2022 |
| | | | US | 2023107064 A1 | 06-04-2023 |
| | | | WO | 2021161289 A1 | 19-08-2021 |

EPO FORM P0459

For more details about this annex : see Official Journal of the European Patent Office, No. 12/82